# DEMANDE DE BREVET EUROPEEN

(11) **EP 4 411 991 A1**
(43) Date de publication de la demande: **07.08.2024**
(21) Numéro de dépôt: 24155013.6
(22) Date de dépôt: 31.01.2024
(51) Int. Cl.: H01R 9/03, H01R 9/22, H01R 4/2416, H02G 3/16

(54) **DISPOSITIF DE CONNEXION POUR CÂBLE ÉLECTRIQUE MULTI-FILS ET DISPOSITIFS COMPLÉMENTAIRES ASSOCIÉS**

(30) Priorité: 01.02.2023 FR 2300933
(71) Demandeur: SCHNEIDER ELECTRIC INDUSTRIES SAS, 92500 Rueil-Malmaison (FR)
(72) Inventeur: MASSE, Dominique, 91360 EPINAY SUR ORGE (FR); BRIOLE, Sylvain, 38240 MEYLAN (FR); PECCOUD, BRUNO, 38100 GRENOBLE (FR); MEGRET, Franck, 38220 MONTCHABOUD (FR)
(74) Mandataire: Lavoix

(57) **Abrégé**

Ce dispositif de connexion (100), pour la connexion d'un câble électrique multi-fils (110) à un module complémentaire, comprend une portion principale (102), qui forme un passage de guidage d'une extrémité du câble, et une portion de maintien (120), qui est solidaire de la portion principale. La portion de maintien (120) comprend des chemins de guidage (124), qui sont chacun configurés pour recevoir un fil respectif du câble, de manière à maintenir le fil correspondant dans une position prédéterminée par rapport à la portion de maintien, où les fils sont accessibles selon une direction de connexion (D120). Le dispositif de connexion (100) est configuré pour coopérer avec le module complémentaire (30) en rapprochant le module complémentaire du dispositif de connexion selon un mouvement de connexion parallèle à la direction de connexion (D120), de manière à connecter le module complémentaire aux fils reçus dans les chemins de guidage.

## Description

La présente invention concerne un dispositif de connexion pour câble électrique multi-fils, une pièce d'assemblage configurée pour coopérer avec un tel dispositif de connexion, une boite de connexion électrique comprenant une telle pièce d'assemblage, une prise de connexion comprenant une telle boite de connexion électrique et un tel dispositif de connexion, un module complémentaire configuré pour être assemblé à une telle prise de connexion, et un ensemble de connexion électrique comprenant une telle prise de connexion électrique et un tel module complémentaire.

Les bâtiments sont généralement équipés de réseaux de câbles multi-fils, prévus pour transporter de l'énergie électrique et/ou des données. Des exemples de câbles multi-fils communément utilisés dans ces bâtiments incluent les câbles dits « Ethernet », qui comprennent plusieurs paires de fils torsadés, et les câbles d'alimentation électrique, comprenant généralement trois fils, c'est-à-dire un fil de phase, un fil de neutre et un fil de terre.

Les câbles sont généralement cachés à l'intérieur des cloisons - généralement dans les murs - du bâtiment, par exemple dans des gaines logées dans les cloisons, et une extrémité de ces câbles aboutissent au niveau de boites de connexion électrique fixées à ces cloisons, généralement encastrées dans les cloisons. Des connecteurs, généralement de type femelle, sont fixés aux extrémités des câbles. Par exemple, ces connecteurs sont une prise électrique femelle, un connecteur dit « RJ45 » femelle, etc. Pour chaque câble multi-fils, l'installateur doit dénuder chaque fil, relier et sécuriser chaque fil au connecteur correspondant, puis fixer le connecteur dans la boite de connexion électrique correspondante, chacune de ces opérations prenant du temps. En outre, en cas de mauvaise connexion, l'installateur n'a souvent pas d'autre choix que de recommencer toute l'opération de mise en place du connecteur à l'extrémité du câble.

EP-0 734 095-A1 décrit, par exemple, un dispositif de connexion pour un câble comprenant des élément conducteurs rigides, qui doivent être dénudés lors de la mise en place du dispositif de connexion.

C'est à ces problèmes qu'entend plus particulièrement remédier l'invention, en proposant un dispositif de connexion pour câble multi-fils qui soit plus facile et plus rapide à connecter au câble.

À cet effet, l'invention concerne un dispositif de connexion pour connecter un câble électrique multi-fils à un module complémentaire.

Selon l'invention, le dispositif de connexion comprend :
- une portion principale, qui forme un passage configuré pour guider une extrémité du câble, le passage incluant un conduit principal, qui débouche à l'extérieur de la portion principale,
- une portion de maintien, qui est solidaire de la portion principale et qui est configurée pour positionner l'extrémité du câble émergeant du passage,
dans lequel :
- la portion de maintien comprend un ou plusieurs chemins de guidage, qui sont chacun configurés pour recevoir un fil respectif du câble, de manière à maintenir le fil correspondant dans une position prédéterminée par rapport à la portion de maintien,
- chaque chemin de guidage comprend une portion de connexion, qui s'étend parallèlement à un même plan de connexion que la portion de maintien,
- les portions de connexion sont agencées de manière à autoriser l'accès à chaque fil reçu dans la portion de connexion correspondante selon une direction de connexion orthogonale au plan de connexion,
- le dispositif de connexion est configuré pour coopérer avec le module complémentaire en rapprochant le module complémentaire du dispositif de connexion selon un mouvement de connexion parallèle à la direction de connexion, de manière à connecter le module complémentaire à chacun des fils reçus dans la portion de connexion correspondante, la portion de maintien étant dans une position de connexion par rapport à la portion de principale.

Grâce à l'invention, chaque fil du câble est reçu dans un chemin de guidage correspondant, ce qui rend systématique la mise en place des fils et évite les erreurs. Une fois que les fils sont mis en place et maintenus, lorsque le dispositif de connexion est en configuration de connexion, le module complémentaire est connecté à chacun de ces fils par un simple mouvement de translation. Avantageusement, le module complémentaire comprend des connecteurs auto-dénudants. La connexion du module complémentaire aux fils maintenus par le dispositif de connexion est simple, rapide, et sans risque d'erreur.

Selon des aspects avantageux mais non obligatoires de l'invention, un tel dispositif de connexion peut incorporer une ou plusieurs des caractéristiques suivantes prises isolément ou selon toute combinaison techniquement admissible :
- Chaque portion de connexion est configurée pour coopérer avec un connecteur respectif du module complémentaire, en particulier un connecteur auto dénudant, de manière à connecter électriquement chaque fil reçu dans la portion de connexion correspondante au connecteur complémentaire correspondant par translation selon la direction de connexion.
- La portion principale comprend un dispositif de blocage, qui est configuré pour pincer le câble lorsque ce câble est reçu dans le passage, de manière à empêcher les mouvements du câble le long du passage.
- La portion principale est configurée pour être fixée à une extrémité d'une gaine de protection du câble, le passage étant agencé dans le prolongement de la gaine.
- La portion principale est configurée pour être fixée à une extrémité d'une gaine annelée comprenant des anneaux,
   alors que la portion principale comprend des organes de clipsage, qui sont configurés pour être coopérer avec les anneaux de la gaine, de manière à fixer la portion principale à la gaine.
- La portion de maintien est mobile en rotation par rapport à la portion principale entre :
   - une position de montage, dans laquelle la portion de maintien n'empêche pas le mouvement longitudinal du câble dans le passage, et
   - la position de connexion, dans laquelle les portions de connexion sont propres à maintenir chaque fil afin de connecter chaque fil au module complémentaire.
- Le conduit principal est configurée pour recevoir un câble comprenant quatre paires de fils, notamment un câble de type Ethernet tel que défini dans la norme IEEE 802.3,
   alors que la portion de maintien comprend un orifice central, qui prolonge le conduit principal lorsque la portion de maintien est en position de montage, et qui forme un angle avec le conduit principal lorsque la portion de maintien est en position de connexion, de manière à guider le câble reçu dans le conduit principal et l'orifice central avec un rayon de courbure supérieur à 3 mm.
- Les portions de connexion sont agencées radialement à un axe central de l'orifice central.
- Le passage inclut, outre le conduit principal, au moins un conduit secondaire, chaque conduit principal ou secondaire étant configuré pour recevoir un fil respectif du câble,
   alors que la portion de maintien comprend plusieurs chemins de guidage, qui sont chacun associés à un conduit respectif et qui sont agencés parallèlement les uns aux autres,
   et que les portions de connexion sont parallèles au conduit principal lorsque la portion de maintien est en position de connexion.

L'invention concerne aussi une pièce d'assemblage configurée pour former un fond d'une boite de connexion électrique, la pièce d'assemblage comprenant au moins un logement, de préférence deux logements, chaque logement étant configuré pour coopérer, notamment par complémentarité de formes, avec un dispositif de connexion respectif, chaque dispositif de connexion étant tel que décrit précédemment, de manière à maintenir chaque dispositif de connexion en configuration de connexion.

Avantageusement, la pièce d'assemblage comprend en outre des organes de maintien, qui sont configurés pour coopérer, notamment par complémentarité de formes, avec la portion principale de chaque dispositif de connexion, de manière à maintenir en position ce dispositif de connexion par rapport à la pièce d'assemblage.

L'invention concerne également une boite de connexion électrique, comprenant un boitier configuré pour être fixé à une cloison, et une pièce d'assemblage telle que décrite précédemment, la pièce d'assemblage formant un fond du boitier.

Avantageusement :
- La pièce d'assemblage est une pièce rapportée au reste du boitier.
- La pièce d'assemblage est réalisée d'une seule pièce avec le reste du boitier.

L'invention concerne également une prise de connexion, qui comprend :
- une boite de connexion telle que décrite précédemment,
- au moins un dispositif de connexion tel que décrit précédemment, chaque dispositif
de connexion étant associé à un logement respectif de la pièce d'assemblage, dans laquelle :
- chaque portion de maintien est reçue dans un logement respectif de la pièce d'assemblage, chaque dispositif de connexion étant maintenu en configuration de connexion,
- la direction de connexion est orthogonale au fond du boitier.

Selon un autre aspect, l'invention concerne un module complémentaire, configuré pour être assemblé à une prise de connexion telle que décrite précédemment, dans lequel :
- le module complémentaire comprend une portion de montage, configurée pour être insérée dans le boitier, selon un mouvement de translation orthogonal au fond du boitier,
- la portion de montage comprend une face inférieure, sur laquelle sont disposés des connecteurs, de préférence des connecteurs auto-dénudants,
- chaque connecteur est agencé de manière à coopérer avec une portion de connexion respective lorsque le module complémentaire est inséré dans le boitier selon le mouvement de translation, de sorte que, lorsqu'un fil est reçu dans cette portion de connexion, le connecteur correspondant est électriquement connecté à ce fil.

L'invention concerne enfin un ensemble de connexion électrique, qui comprend :
- une prise de connexion telle que décrite précédemment,
- un module complémentaire tel que décrit précédemment,
dans lequel le module complémentaire est inséré dans la prise de connexion.

L'invention sera mieux comprise, et d'autres avantages de celle-ci apparaîtront plus clairement à la lumière de la description qui va suivre, de plusieurs modes de réalisation d'un dispositif de connexion pour câble électrique multi-fils, d'une pièce d'assemblage, d'une boite de connexion électrique, d'une prise de connexion, d'un module complémentaire et d'un ensemble de connexion électrique, conformes à son principe, donnée uniquement à titre d'exemple et faite en référence aux dessins annexés, dans lesquels :
- [Fig 1] la figure 1 représente, sur deux inserts a) et b), un ensemble de connexion électrique conforme à un premier mode de réalisation de l'invention, respectivement représenté monté sur une cloison et isolément, l'ensemble de connexion comprenant une prise de connexion et un module complémentaire de cette prise, eux aussi conformes au premier mode de réalisation de l'invention ;
- [Fig 2] la figure 2 représente, sur deux inserts a) et b), deux vues en perspective partiellement éclatée de l'ensemble de connexion de la figure 1, observé selon deux directions différentes,
- [Fig 3] la figure 3 représente, sur trois inserts a), b) et c), des étapes d'assemblage d'un dispositif de connexion de l'ensemble de connexion de la figure 1, le dispositif de connexion étant conforme à un premier mode de réalisation de l'invention ;
- [Fig 4] la figure 4 représente, sur deux inserts a) et b), des étapes d'assemblage du dispositif de connexion de la figure 3 à un boitier de la prise de connexion de la figure 1,
- [Fig 5] la figure 5 représente respectivement, sur trois inserts a), b) et c), une vue en perspective du module complémentaire de la figure 1 et des détails du module complémentaire observés à plus grande échelle ;
- [Fig 6] la figure 6 représente, sur trois inserts a), b) et c), des étapes d'assemblage d'un dispositif de connexion de l'ensemble de connexion de la figure 1, le dispositif de connexion étant conforme à un deuxième mode de réalisation de l'invention ;
- [Fig 7] la figure 7 représente, sur trois inserts a), b) et c), des étapes d'assemblage du dispositif de connexion de la figure 6 à un câble de type Ethernet ;
- [Fig 8] la figure 8 représente respectivement, sur deux inserts a) et b), une prise de connexion conforme à un mode de réalisation alternatif de l'invention, et un module complémentaire de cette prise de connexion ;
- [Fig 9] la figure 9 représente respectivement, sur deux inserts a) et b), une prise de connexion conforme à un autre mode de réalisation alternatif de l'invention, et un module complémentaire de cette prise de connexion ;
- [Fig 10] la figure 10 représente respectivement, sur deux inserts a) et b), des modules complémentaires conformes à des modes de réalisation alternatifs de l'invention ;
- [Fig 11] la figure 11 représente respectivement, sur deux inserts a) et b), une vue en perspective partiellement éclatée d'un ensemble de connexion électrique conforme à un mode de réalisation alternatif de l'invention, cet ensemble de connexion électrique comprenant une prise de connexion électrique et un module complémentaire, et une vue de face de la prise de connexion électrique de l'insert a), et
- [Fig 12] la figure 12 représente respectivement, sur deux inserts a) et b), une vue en perspective d'une boite de connexion électrique de la prise de connexion électrique de la figure 11, et un dispositif de connexion de la prise de connexion électrique de la figure 11.

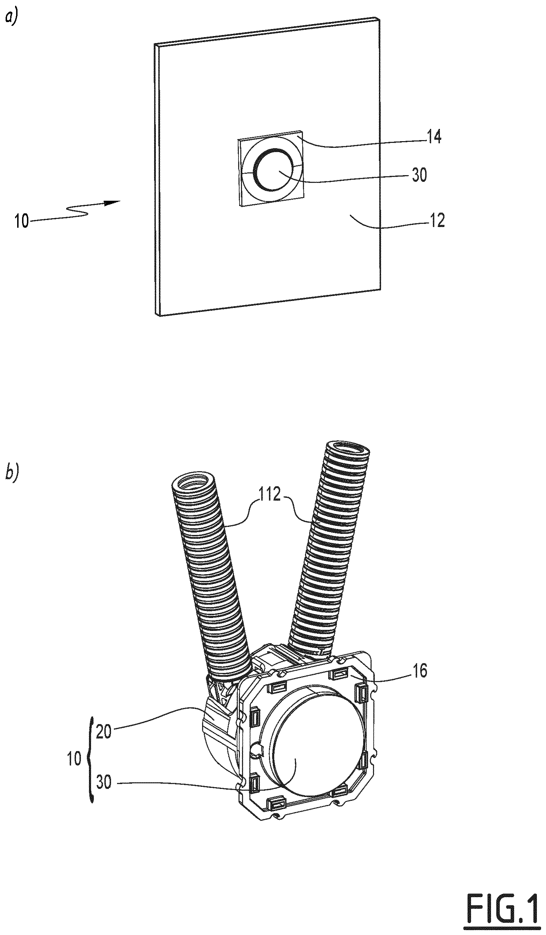

Un ensemble de connexion 10 électrique conforme à un premier mode de réalisation de l'invention est représenté sur la figure 1. Sur l'insert a), l'ensemble de connexion 10 est représenté fixé à une cloison 12, ici une plaque de plâtre. En particulier, seule une partie de l'ensemble de connexion 10 dépasse de la cloison 12, l'ensemble de connexion 10 étant encastré dans la cloison 12. La cloison 12 est supposée plane et verticale. La description qui suit est faite en référence à l'orientation des divers éléments de l'ensemble de connexion 10 tels que représentés sur figures, sachant qu'il peut en être autrement dans la réalité.

Sur l'insert b), la cloison 12 n'est pas représentée. L'ensemble de connexion 10 comprend une prise de connexion 20 et un module complémentaire 30, qui est ici représenté est inséré dans la prise de connexion 20. L'ensemble de connexion 10 est dans une configuration connectée.

Sur l'insert a), la prise de connexion 10 est masquée par un capot 14 de finition, tandis que le module complémentaire 30 émerge d'un trou central ménagé dans le capot 14. Le capot 14 est assemblé au reste de la prise de connexion 20 par l'intermédiaire d'une embase 16, visible sur la figure 1a). Le capot 14 est de préférence assemblé à l'embase 16 par clipsage, de manière faciliter son montage et, le cas échéant, son démontage.

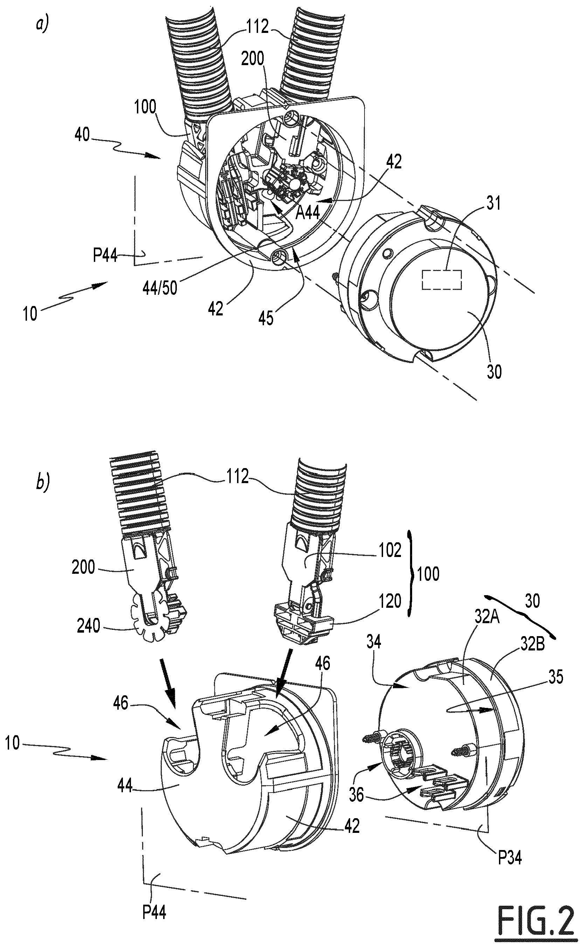

Sur la figure 2, l'ensemble de connexion 10 est représentée selon une perspective partiellement éclatée, le module complémentaire 30 étant situé à distance de la prise de connexion 20, révélant l'intérieur de la prise de connexion 20. Le module complémentaire 30 est dans une configuration dite de connexion à la prise de connexion 20, c'est-à-dire que - comme décrit plus loin - le module complémentaire 30 peut être connecté à la prise de connexion 20 selon un mouvement de connexion, c'est-à-dire en rapprochant le module complémentaire 30 de la prise de connexion 20 par un mouvement de translation et en insérant le module complémentaire 30 dans la prise de connexion 20.

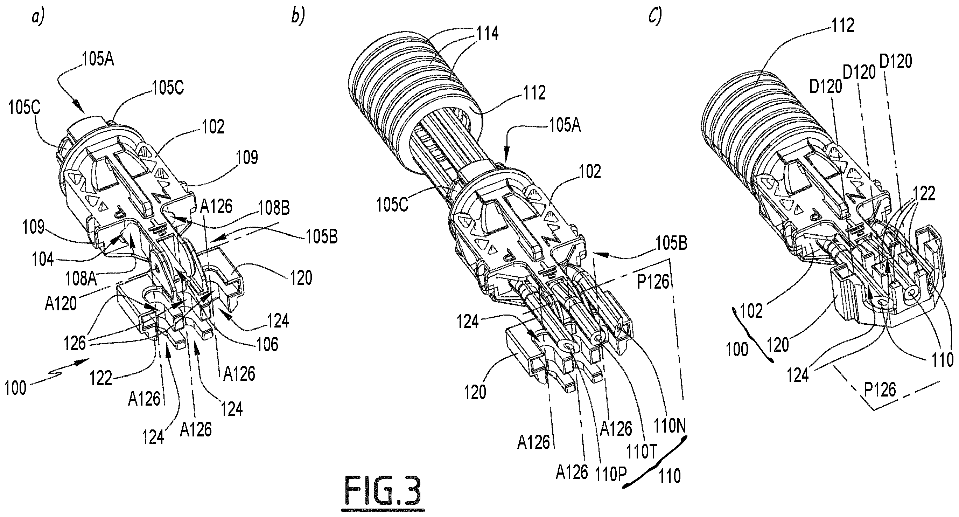

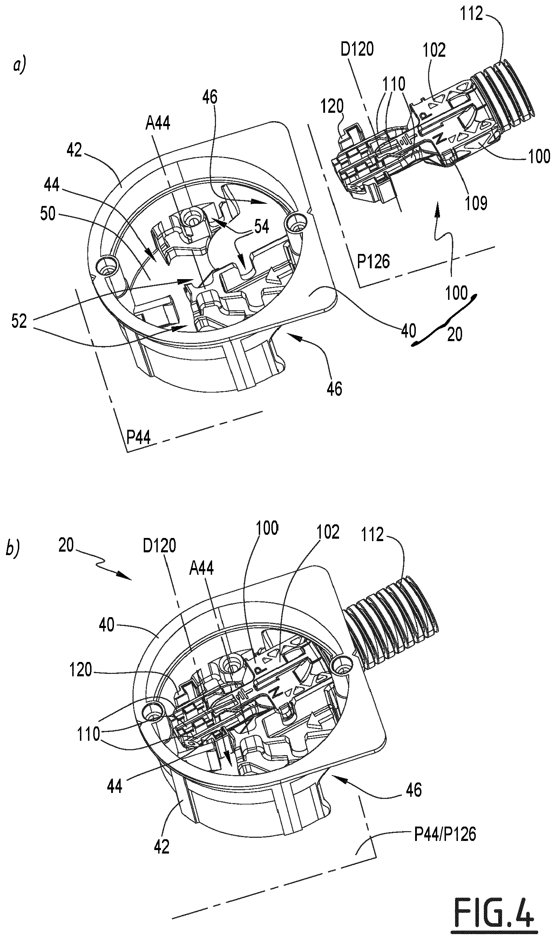

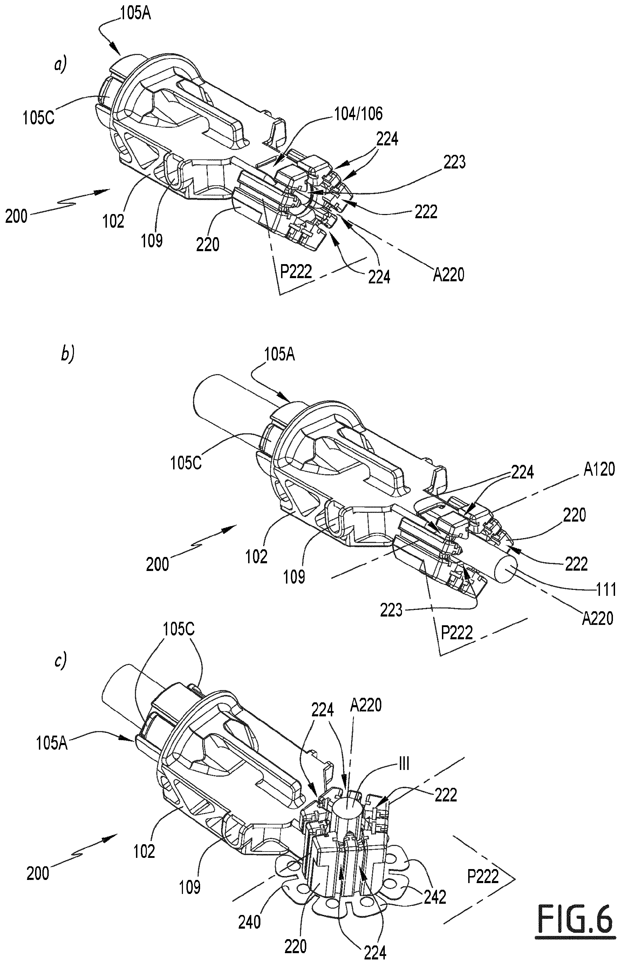

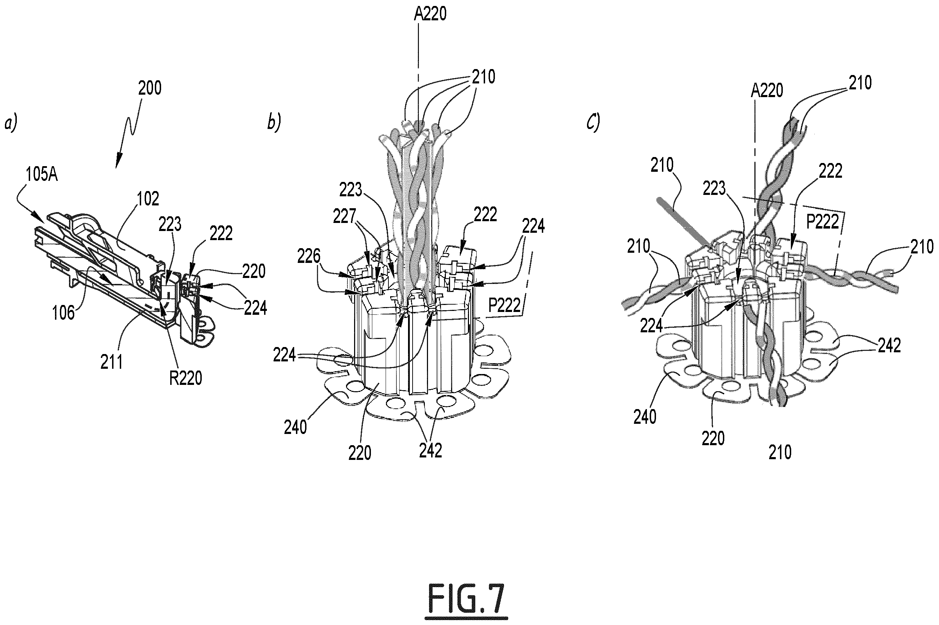

La prise de connexion 20 comprend une boite de connexion 40 électrique, à laquelle est assemblé au moins un dispositif de connexion. Dans l'exemple illustré, la prise de connexion 20 comprend deux dispositifs de connexion de deux types différents, qui correspondent à deux modes de réalisation différents. Un dispositif de connexion 100 du premier type, correspondant au premier mode de réalisation est représenté sur les figures 3 et 4, tandis qu'un dispositif de connexion 200 du deuxième type, correspondant au deuxième mode de réalisation est représenté sur les figures 6 et 7. Le dispositif de connexion 100 du premier type est prévu pour la connexion à un câble de puissance (ou dit autrement « câble électrique »), tandis que le dispositif de connexion 200 du deuxième type est prévu pour la connexion à un câble Ethernet (comprenant deux ou quatre paires de fils), c'est-à-dire conformes à une norme IEEE 802 .3 (IEEE pour « *Institute of Electrical and Electronics Engineers* »). Le dispositif de connexion 200 est prévu avantageusement pour la connexion à un câble Ethernet comprenant une alimentation électrique (« *Power over Ethernet (PoE)* » en anglais), par exemple conforme à l'une des normes IEEE 802.3af, IEEE 802.3at ou IEEE 802.3bt. Le dispositif de connexion 200 est aussi prévu pour la connexion à un câble Ethernet à paire torsadée simple comprenant une alimentation électrique (« *Power over Data Lines (PoOL) for single twisted pair Ethernet* » en anglais), par exemple conforme à la norme IEEE 802.3bu.

Les dispositifs de connexion 100, 200 sont représentés connectés à la boite de connexion 40 sur la figure 2a), et à distance de la boite de connexion 40 sur la figure 2b).

Chaque dispositif de connexion 100, 200 est associé à un câble multi-fils respectif, en particulier chaque dispositif de connexion 100, 200 est fixé à une extrémité de ce câble. Chaque dispositif de connexion 100, 200 est configuré pour maintenir les fils du câble correspondant immobiles par rapport à la boite de connexion 40, de manière à faciliter la connexion du module complémentaire 30 selon le mouvement de connexion.

La boite de connexion 40 comprend un boitier 42 creux, qui ménage un volume de réception V42 du module complémentaire 30. Le boitier 42 est configuré pour être fixé à la cloison 12, par exemple au moyen de vis ou d'un autre moyen de fixation équivalent. Le boitier 42 comprend un fond 44, qui est globalement plan et qui s'étend selon un plan de fond P44. Lorsque la boite de connexion 40 est fixée à la cloison 12, le plan de fond 44 est sensiblement parallèle à la cloison 12. Le boitier 42 présente une forme globalement cylindrique, avec ici une section globalement circulaire centrée sur un axe d'engagement A44. L'axe d'engagement A44 est donc orthogonal au fond 44 du boitier. Lors de l'insertion du module complémentaire 30 dans la boite de connexion 40, le mouvement de connexion est parallèle à l'axe d'engagement A44, autrement dit orthogonal au fond 44 du boitier 42.

Le module complémentaire 30 renferme ici une unité de contrôle 31, représentée schématiquement en pointillés. Selon les cas, l'unité de contrôle 31 comprend une carte électronique avec un ou plusieurs micro processeurs, une ou plusieurs mémoires, un ou plusieurs moyens de communications sans fil, etc. Le module complémentaire 30 comprend une portion de montage 32A, qui est configurée pour être insérée dans le boitier 42. Dans l'exemple illustré, le module complémentaire 30 comprend une portion externe 32B, qui dépasse du boitier 42 lorsque la portion de montage 32A est reçue dans le boitier 42. En variante non illustrée, le module complémentaire 30 ne dépasse pas du boitier 42 lorsque la portion de montage 32A est reçue dans le boitier 42.

La portion de montage 32A comprend une face inférieure 34, qui est agencée en regard du fond 44 du boitier 42 lorsque le module complémentaire 40 est connecté à la prise de connexion 20, autrement dit lorsque l'ensemble de connexion 10 est en configuration connectée. La face inférieure 34 est ici globalement plane et s'étend selon un plan inférieur P34. La portion de montage 32A présente une forme globalement cylindrique de section circulaire, centrée sur un axe de fond A44, qui est orthogonal au plan P34. De préférence, en configuration connectée de l'ensemble de connexion 10, le plan inférieur P34 est parallèle, ou sensiblement parallèle, au plan de fond P44 - autrement dit l'axe d'engagement A44 est orthogonal au plan inférieur P34. Par « sensiblement parallèle », on entend parallèle à ±5° près. Le module complémentaire 30 comprend aussi des connecteurs 36, qui sont disposés sur la face inférieure 34. Les connecteurs 36 sont détaillés plus loin.

Le boitier 42 comprend avantageusement un épaulement interne 45, configuré pour coopérer avec un épaulement complémentaire 35 ménagé sur le module complémentaire 30, de manière à obturer de manière étanche à l'air le boitier 42 lorsque le module complémentaire 40 est assemblé au boitier 42. L'épaulement complémentaire 35 est ménagé sur une paroi périphérique de la portion de montage 32A.

On évite ainsi les fuites d'air au travers de l'ensemble de connexion 10, ce qui contribue au confort thermique des personnes présentes dans le bâtiment. Optionnellement, un élément d'étanchéité tel qu'un joint est ménagé sur l'un et/ou l'autre des épaulements 45 et 35, par exemple un joint en élastomère. L'élément d'étanchéité n'est pas représenté. L'élément d'étanchéité est avantageusement fabriqué par bi-injection avec un boitier du module complémentaire 30.

Le boitier 42 comprend aussi des ouvertures 46, qui sont chacune prévues pour laisser passer un dispositif de connexion 100, 200 respectif lors de l'assemblage de ce dispositif de connexion 100, 200 au boitier 42. Le boitier 42 comprend ici deux ouvertures 46.

La boite de connexion 40 comprend aussi une pièce d'assemblage 50, qui forme un fond 44 du boitier 42. Comme détaillé plus loin, la pièce d'assemblage 50 est configurée pour maintenir chaque dispositif de connexion 100, 200 dans une configuration de connexion, où les fils du câble multi-fils correspondant à ce dispositif de connexion 100, 200 sont positionnés de manière à ce que le module 30 puisse coopérer avec les dispositifs de connexion 100 et 200.

Dans l'exemple illustré, la pièce d'assemblage 50 est réalisée d'une seule pièce avec le reste du boitier 42. En variante non représentée, la pièce d'assemblage 50 est une pièce rapportée au reste du boitier 42, par exemple fixée au reste du boitier par des moyens de fixation tels que des vis, voire assemblée au reste du boitier 42 par clipsage. Plus généralement, la pièce d'assemblage 50 est configurée pour former le fond 44 de la boite de connexion 40.

On décrit à présent le dispositif de connexion 100 représenté en figure 3. Ce dispositif de connexion 100 est prévu pour connecter un câble d'alimentation en puissance électrique, par exemple sous une tension supérieure à 100 Volts. Ce câble d'alimentation est ici représenté par trois fils 110, les trois fils 110 incluant un fil de phase 110P, un fil neutre 100N et un fil de terre 100T. Les fils 110 sont généralement identifiés par des couleurs distinctes. Les trois fils 110, et plus généralement les câbles multi fils, ne font pas partie de l'invention mais servent à en présenter le contexte d'utilisation. Chaque fil 110 comprend une âme conductrice en métal, généralement en cuivre ou en alliage de cuivre, qui est reçue dans une gaine isolante réalisée en polymère synthétique. Dans l'exemple illustré, l'âme conductrice de chaque fil 110 n'est constituée que d'un seul brin. En variante, l'âme conductrice comprend plusieurs brins, qui sont reçus dans la même gaine isolante.

Le dispositif de connexion 100 comprend une portion principale 102, qui forme un passage 104 configuré pour guider une extrémité du câble. Le passage 104 est donc configuré pour guider une extrémité de chaque fil 110 de ce câble. Le passage 104 débouche à l'extérieur de la portion principale 102 par deux ouvertures opposées, incluant une ouverture arrière 105A et une ouverture avant 105B. Dans l'exemple illustré, le câble est introduit par l'ouverture arrière 105A et sort par l'ouverture avant 105B, autrement dit le câble débouche vers une direction avant de la portion principale 102.

La portion principale 102 est avantageusement configurée pour être fixée à une extrémité d'une gaine 112 de protection du câble, le passage 104 étant agencé dans le prolongement de la gaine 112. Comme pour les câbles, la gaine 112 ne fait pas partie de l'invention mais sert à en préciser le contexte d'utilisation. Dans l'exemple illustré, la gaine 112 est une gaine semi-rigide annelée, qui comprend des anneaux 114. Ainsi la portion principale 102 est configurée pour être fixée à une extrémité de la gaine 112 annelée, et comprend à cet effet des organes de clipsage 105C, qui sont configurés pour coopérer avec des anneaux 114 de la gaine 112. Les organes de clipsage 105C sont ici ménagés en périphérie de l'ouverture arrière 105A. Lors de l'assemblage de la portion principale 102 à la gaine 112, les organes de clipsage 105C sont insérés dans la gaine 112 est se déforment élastiquement pour accommoder le passage de la gaine 112 puis, par retour élastique, coopèrent avec les anneaux 114 de manière à retenir la gaine 112.

Le passage 104 comprend un conduit principal 106, qui est ici intercalé entre deux conduits secondaires 108A et 108B. Chaque conduit principal 106 ou secondaire 108A, 108B est configuré pour recevoir un fil 110 respectif du câble, de manière à guider ce fil 110. Ainsi les extrémités des fils 110 sont séparées les unes des autres et sont facilement identifiables.

Lorsque le câble ne comprend que deux fils 110, par exemple lorsque le câble ne comprend pas le fil de terre 110T, un tel câble à deux fils 110 peut tout à fait être monté au dispositif de connexion 100 comprenant trois conduits, à savoir le conduit principal 106 et les deux conduits secondaires 108A et 108B. En variante le dispositif de connexion 100 ne comprend, outre le conduit principal 106, qu'un seul conduit secondaire.

Le dispositif de connexion 100 comprend aussi une portion de maintien 120, qui est solidaire de la portion principale 102 et qui est configurée pour positionner l'extrémité du câble émergeant par l'ouverture de la portion principale 102, ici par l'ouverture avant 105B.

Dans l'exemple illustré, la portion principale 102 et la portion de maintien 120 sont deux éléments distincts, qui sont assemblés l'un à l'autre de manière que la portion de maintien 120 est articulée en rotation par rapport à la portion principale 102 autour d'un axe de rotation A120. Sur les figures 3a) et 3b), le dispositif de connexion 100 est représenté dans une configuration dite de montage, tandis que sur la figure 3c), le dispositif de connexion 100 est représenté dans une configuration dite « de connexion », le passage de la configuration de montage à la configuration de connexion se faisait par rotation de la portion de maintien 120 par rapport à la portion principale 102 autour de l'axe de rotation A120. Lorsque le dispositif de connexion 100 est en configuration de connexion, respectivement de montage, la portion de maintien 120 est dans une position de connexion, respectivement de montage, par rapport à la portion principale 102.

En variante non représentée, la portion de maintien 120 est simplement fixée à la portion principale, sans liberté de mouvement par rapport à la portion principale, la portion de maintien 120 étant fixée en position de connexion à la portion principale 102. Selon une autre variante non représentée, la portion de maintien et la portion principale sont fabriquées d'une seule pièce, la portion de maintien 120 étant alors immobile en position de connexion par rapport à la portion principale 102.

Comme représenté sur la figure 3b), lorsque la portion de maintien 120 est en position de montage, la portion de maintien 120 n'empêche pas le mouvement longitudinal du câble dans le passage 104. Un installateur peut ainsi, à son gré, ajuster la position des fils 110 par rapport au dispositif de connexion 100, en particulier ajuster une longueur des fils 110 dépassant de la portion principale 102.

La portion de maintien 120 comprend des excroissances 122, qui ménagent entre elles plusieurs chemins de guidage 124, qui sont chacun configurés pour recevoir un fil 110 respectif du câble. Lorsqu'un fil 110 est reçu dans le chemin de guidage 124 correspondant, ce fil 110 est maintenu dans une position prédéterminée par rapport à la portion de maintien 120. Par exemple, la gaine isolante de ce fil 110 est reçue serrée dans le chemin de guidage 124 correspondant, de sorte que ce fil 110 est considéré comme immobile par rapport à la portion de maintien 120. Ainsi chaque fil 110 est maintenu dans une position prédéterminée par rapport à la portion de maintien 120 correspondante, que le fil 110 soit rigide ou flexible. Le dispositif de connexion 100 peut ainsi être monté sur un câble comprenant des fils 110 rigides aussi bien que des fils 110 souples. Il n'est pas nécessaire de dénuder chaque fil 110, ce qui procure un gain de temps et facilite la connexion du dispositif de connexion 100 sur le câble.

Chaque chemin de guidage 124 comprend une portion de connexion 126. Les portions de connexion 126 sont ici des portions rectilignes des chemins de guidage 124, qui s'étendent chacune selon un axe A126. Les axes A126 des portions de connexion 126 sont parallèles à un même plan de connexion P126 de la portion de maintien 120.

Les axes A126 des portions de connexion 126 sont de préférence coplanaires. Dans ce mode de réalisation du dispositif de connexion 100, les portions de connexion 126 sont parallèles entre elles, et sont parallèles au conduit principal 106 lorsque la portion de maintien 120 est en position de connexion.

Dans l'exemple illustré, la portion de maintien 120 comprend plusieurs chemins de guidage 124, qui sont chacun associés à un conduit 106 ou 108A ou 108B respectif et qui sont agencés parallèlement les uns aux autres.

Les portions de connexion 126 sont éloignées les unes des autres, de manière à maintenir chaque fil 110 à distance des autres fils 110, et à isoler électriquement les uns des autres les fils 110 reçus dans les portions de connexion 126. Les portions de connexion 126 sont agencées de manière à autoriser l'accès à chaque fil 110 reçu dans la portion de connexion 126 correspondante selon une direction de connexion D120, les directions de connexion D120 étant orthogonales au plan de connexion P126 et orientées dans le même sens. Autrement dit, tous les fils 110 reçus dans les portions de connexion 126 d'une même portion de maintien 120 sont visibles, et physiquement accessibles, selon la direction de connexion D120.

Dans l'exemple de la figure 3c), la portion de maintien 120 est en position de connexion par rapport à la portion principale 102, tandis que chaque fil 110 est reçu dans une portion de connexion 126 respective. Les portions de connexion 126 maintiennent les fils 110 afin qu'ils puissent être connectés au module complémentaire 30. La direction de connexion D120, orthogonale au fond 44 du boitier 42, est ici située vers le haut de la figure 3c).

Sur la figure 4a), le dispositif de connexion 100 est dans la même configuration que sur la figure 3 c). Le dispositif de connexion 100 est approché de la boite de connexion 40 en regard de l'ouverture 46 choisie par l'installateur, puis est inséré dans la boite de connexion 40, en positionnant le dispositif de connexion 100 contre la pièce d'assemblage 50, de sorte que le plan de connexion P126 est parallèle au plan de fond P44. La direction de connexion D120 est parallèle à l'axe d'engagement A44 et orientée à l'opposé du fond 44 du boitier 42.

La pièce d'assemblage 50 comprend au moins un logement 52, chaque logement 52 étant associé à une ouverture 46 respective. La pièce d'assemblage 50 comprend ici deux logements 52, chaque logement 52 étant configuré pour coopérer, notamment par complémentarité de formes, avec un dispositif de connexion 100 respectif, de manière que le dispositif de connexion 100 passant par une ouverture 46 donnée ne puisse être positionné que selon une unique position par rapport à la pièce d'assemblage 50.

Avantageusement, la portion principale 102 du dispositif de connexion 100 comprend des excroissances 109, ici en forme de « U », qui coopèrent avec des encoches complémentaires 54 de la pièce d'assemblage, comme illustré sur la figure 4b). Lors de l'assemblage du dispositif de connexion 100 à la pièce d'assemblage 50, les excroissances 109 sont reçues dans les encoches complémentaires 54, en particulier clipsées dans les encoches 54, de manière à maintenir en position le dispositif de connexion 100 par rapport à la pièce d'assemblage 50.

En référence à la figure 4 b), une fois que les excroissances 109 sont reçues dans les encoches 52 complémentaires, le dispositif de connexion 100 se retrouve assemblé à la pièce d'assemblage 50, formant la prise de connexion 20. Le dispositif de connexion 100 est maintenu en configuration de connexion. En particulier, la direction de connexion D120 est maintenue parallèle à l'axe d'engagement A44. Les excroissances 109 et les encoches complémentaires 54 sont un exemple non limitatif d'organes de maintien, qui sont configurés pour coopérer, notamment par complémentarité de formes, de manière à maintenir en position ce dispositif de connexion 100 par rapport à la pièce d'assemblage 50.

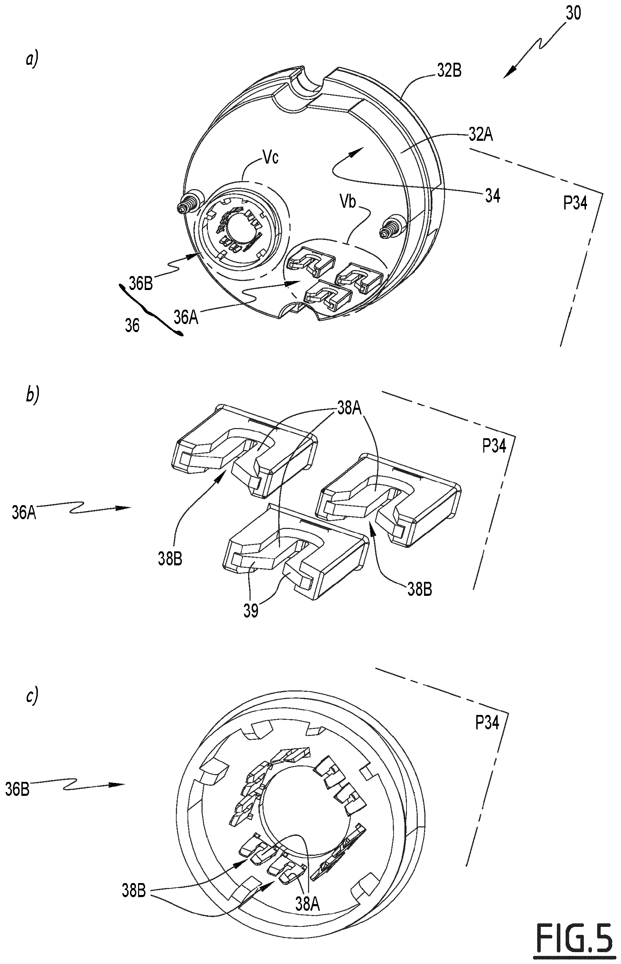

On décrit à présent les principes de la connexion du module complémentaire 30 à la prise de connexion 20, notamment en référence à la figure 5.

Le dispositif de connexion 100, maintenu en configuration de connexion par la pièce d'assemblage 50, est configuré pour coopérer avec le module complémentaire 30 en rapprochant le module complémentaire 30 du dispositif de connexion 100 selon le mouvement de connexion parallèle à la direction de connexion D120, de manière à connecter le module complémentaire 30 à chacun des fils 110 reçus dans la portion de connexion126 correspondante, la portion de maintien 120 étant dans une position de connexion par rapport à la portion de principale 102. Plus précisément, les connecteurs 36, disposés sur la face inférieure 34 du module complémentaire 30, sont chacun configurés pour être connectés à un fil 110 respectif lorsque ce fil 110 est reçu dans la portion de connexion 126 associée à ce fil.

Comme illustré sur la figure 5 a), les connecteurs 36 incluent ici deux types de connecteurs différents, à savoir des premiers connecteurs 36A et des deuxièmes connecteurs 36B. Les premiers connecteurs 36A sont configurés pour coopérer avec le dispositif de connexion 100 du premier type décrit précédemment, tandis que les deuxièmes connecteurs 36B sont configurés pour coopérer avec le dispositif de connexion 200 du deuxième type, qui est détaillé plus loin.

De manière générale, chaque connecteur 36 est agencé de manière à coopérer avec une portion de connexion 126 respective lorsque le module complémentaire 34 est inséré dans le boitier 42 selon le mouvement de connexion, de sorte que, lorsqu'un fil 110 est reçu dans cette portion de connexion 126, le connecteur 36 correspondant est électriquement connecté à ce fil 110.

Les connecteurs 36 sont de préférence des connecteurs auto-dénudants, c'est-à-dire que chaque connecteur 36 est configuré pour être connecté à un fil 110 sans avoir à préalablement exposer l'âme conductrice de ce fil en ôtant une partie de la gaine isolante entourant l'âme conductrice.

Dans l'exemple illustré, chaque connecteur 36 comprend une lame 38A, qui est réalisé en métal, qui est agencée en saillie sur la face inférieure 34, et dans laquelle est ménagée une fente 38B. Chaque fente 38B s'étend orthogonalement au plan inférieur P34. Pour chaque connecteur 36, la fente 38B est prévue pour recevoir l'âme conductrice du fil 110 associé à ce connecteur 36, de manière à établir une connexion électrique entre la lame 38A et ce fil 110. Chaque fente 38B présente une extrémité évasée 39, avec des arêtes vives, de préférence coupantes, qui sont prévues pour couper la gaine isolante du fil 110 lorsque le fil 110 est inséré dans la fente 38B.

Au cours du mouvement de connexion du module complémentaire 30 à la prise de connexion 20, lorsqu'un fil 110 est reçu dans une portion de connexion 126, à mesure que la face inférieure 34 s'approche de la pièce d'assemblage 50, le connecteur 36 associé à ce fil 110 se rapproche de ce fil 110, l'extrémité évasée 39 centre le fil par rapport à la fente 38B et découpe la gaine isolante de ce fil 110. Le mouvement de connexion se poursuivant, l'âme conductrice du fil 110 est reçue dans la fente 38B, établissant le contact électrique avec la lame 38A.

En référence à la figure 5b), les premiers connecteurs 36A sont au nombre de trois et sont chacun configurés pour être connecté à l'un des fils 110P, 110N ou 110T, qui sont chacun reçus dans leur portion de connexion 126 respective, la portion de maintien 120 étant elle-même maintenue par la pièce d'assemblage 50.

En référence à la figure 5c), les deuxièmes connecteurs 36B sont ici au nombre de neuf, incluant huit lames 38A associées par paires et une neuvième lame 38A. Les lames 38A d'une même paire sont alignées l'une avec l'autre, les quatre paires de lames 38A et la neuvième lame 38A forment ainsi cinq groupes, qui sont ici agencés selon une forme pentagonale.

On décrit à présent, en référence aux figures 6 et 7, le dispositif de connexion 200 correspondant au deuxième mode de réalisation de l'invention. Dans le deuxième mode de réalisation, les éléments analogues à ceux du premier mode de réalisation portent les mêmes références et fonctionnent de la même façon. Dans ce qui suit, on décrit principalement les différences entre les premier et deuxième modes de réalisation.

Une des principales différences du deuxième mode de réalisation avec le premier mode est que le dispositif de connexion 200 conforme au deuxième mode de réalisation de l'invention est configuré pour être connecté à un câble de type Ethernet, qui comprend ici quatre paires de fils 210 torsadés, soit huit fils, et un neuvième fil 210 de masse, les neufs fils 210 étant reçus dans une gaine souple 211. La gaine souple 211 intègre avantageusement un écran métallique, notamment un feuillard en aluminium, qui forme un écran aux perturbations électromagnétiques, le neuvième fil 210 de masse formant un drain pour cet écran. Sur les figures 6 et 7a), la gaine souple 211 cache les fils 210 du câble Ethernet, tandis que sur les figures 7b) et 7c), la gaine souple 211 n'est pas représentée, seuls les fils 210 du câble Ethernet étant visibles.

Le dispositif de connexion 200 est représenté isolé sur la figure 6a). Le dispositif de connexion 200 comprend la portion principale 102 et une portion de maintien 220.

La portion principale 102 ménage le passage 104, qui ne comprend ici que le conduit principal 106, qui est configuré pour laisser passer le câble Ethernet, en particulier pour laisser passer la gaine souple 211 couvrant les fils 210, comme représenté sur la figure 7a).

La portion de maintien 220 est ici une portion distincte de la portion principale 102 et est articulée en rotation par rapport à la portion principale 102 autour de l'axe de rotation A120. Sur les figures 6a) et 6b), le dispositif de connexion 200 est représenté en configuration de montage, tandis que sur les figures 6c) et 7a), le dispositif de connexion 200 est représenté en configuration de connexion.

La portion de maintien 220 présente une forme cylindrique, qui s'étend selon un axe central A220 et présente ici une section globalement pentagonale. L'axe central A220 est ici radial à l'axe de rotation A120. La portion de maintien 220 comprend une face avant 222, qui est orientée à l'opposé de la portion principale 102 lorsque la portion de maintien 220 est en position de montage. La face avant 222 est ici globalement pentagonale et s'étend selon un plan avant P222 qui est orthogonal à l'axe central A220.

Un orifice central 223 est ménagé au travers de la portion principale 220 et débouche sur la face avant 222. L'orifice central 223 est centré sur l'axe central A220 et est aligné avec le conduit principal 106 lorsque la portion de maintien 220 est en position de montage. Autrement dit, l'orifice central 223 prolonge le conduit principal 106 lorsque la portion de maintien 220 est en position de montage. L'insertion du câble Ethernet au travers du dispositif de connexion 200 est ainsi facilitée, sans risque de déstructurer l'organisation des fils 110 reçus dans la gaine souple 211 et d'endommager ces mêmes fils 110, ce qui nuirait à la qualité du signal transmis lors de l'utilisation du câble Ethernet.

Le passage de la position de montage à la position de connexion se fait ici en faisant pivoter la portion de maintien 220 de 90° autour de l'axe de rotation A120. Lorsque le dispositif de connexion 200 est en position de connexion et est reçu dans un des logements 52 de la pièce d'assemblage 50, le plan avant P222 est parallèle au plan de fond P44, la face avant 222 étant orientée à l'opposé du fond 44.

Avantageusement, le dispositif de connexion 200 comprend des organes d'indexation, qui sont configurés pour maintenir le dispositif de connexion 200 en configuration de connexion. Les organes d'indexation ne sont pas représentés. Par exemple, la portion principale 102 comprend un ergot, tandis que la portion de maintien 220 comprend une encoche de forme complémentaire à l'ergot, l'ergot et l'encoche coopérant ensemble de manière à former les organes d'indexation.

Lorsque la portion de maintien 220 est en position de connexion, l'orifice central 223 forme un angle avec le conduit principal 106, de préférence un angle droit, tandis que le câble Ethernet traversant le dispositif de connexion 200 présente une pliure. On définit un rayon de courbure R220 du câble Ethernet comme étant un rayon de courbure de la gaine souple 211 mesuré au niveau de la pliure. L'orifice central 223 et le conduit principal 106 sont agencés de manière à guider le câble reçu dans le conduit principal 106 et l'orifice central 223. Ainsi, grâce au dispositif de connexion 100, le câble Ethernet est plié de manière reproductible et sans risque d'écrasement du câble Ethernet potentiellement causé par une mauvaise manipulation de l'installateur, ce qui nuirait à la qualité du signal transmis. Cette reproductibilité du rayon de courbure R220 assure une protection des écrans du câble Ethernet. De préférence, le rayon de courbure R220 est supérieur à 3 mm, de manière à ne pas écraser le câble Ethernet lors de la mise en place du dispositif de connexion 100.

Avantageusement, lorsque la portion de maintien 220 est en position de connexion, les frottements de la gaine 211 sur les parois du conduit principal 106 et/ou de l'orifice central 223 empêchent les mouvements du câble Ethernet le long du conduit principal 106.

La portion de maintien 220 comprend des chemins de guidage 224, qui sont ici ménagés en creux dans la face avant 222. Les chemins de guidage 224 sont chacun configurés pour recevoir un fil 210 respectif du câble, de manière à maintenir le fil 210 correspondant dans une position prédéterminée par rapport à la portion de maintien 220. La portion de maintien 220 comprend ici neuf chemins de guidage 224, incluant huit chemins de guidage 224 associés par paires, et un neuvième chemin de guidage 224. Les paires de chemins de guidage 224 sont chacune associées à une paire torsadée de fils 210 du câble Ethernet, tandis que le neuvième chemin de guidage 224 est associé au neuvième fil 210 de drain d'écran du câble Ethernet.

Chaque chemin de guidage 224 comprend une portion de connexion 226, qui s'étend parallèlement au plan avant P222 de la portion de maintien 220. Les portions de connexion 226 sont de préférence agencées radialement à l'axe central A220 de l'orifice central 223. Chaque portion de connexion 226 comprend des encoches 227, qui sont prévues pour guider les lames 38A - cf. figure 5 - des deuxièmes connecteurs 36B.

On comprend que chaque lame 38A est insérée dans une encoche 227 respective selon un mouvement orthogonal au plan avant P222. Autrement dit, lorsque la portion de maintien 220 est en position de connexion, le plan avant P222 est le plan de connexion.

Avantageusement, le dispositif de connexion 200 comprend aussi un organiseur 240, qui est configuré pour être assemblé à la portion de maintien 220 de manière à aider un installateur à différencier les chemins de guidage 224 les uns des autres. Dans l'exemple illustré, l'organiseur 240 est collé à une face arrière 241 de la portion de maintien 220, la face arrière 241 étant opposée à la face avant 222. L'organiseur 240 est ici une étiquette, qui est avantageusement réalisée en un matériau souple, l'organiseur 240 étant conçu pour rester en place, fixée à la portion de maintien 220, lorsque le dispositif de connexion 200 est reçu dans le boitier 42. L'organiseur 240 se replie en trouvant sa place entre les flancs de la portion de maintien 220 et les parois du logement 52. Ainsi, l'organiseur 240 reste toujours à disposition de l'installateur pour permettre la vérification du bon positionnement des fils du câble Ethernet, comme expliqué ci-après.

En variante non représentée, l'organiseur est réalisé en un matériau rigide est assemblé par clipsage à la face arrière 241 de la portion de maintien 220, par exemple au moyen d'un système de clipsage tel qu'un ensemble ergot / encoche ou équivalent.

En variante non représentée, l'organiseur 240 est réalisé d'une seule pièce avec la portion de maintien 220. L'organiseur 240 est alors de préférence sécable, c'est-à-dire que l'organiseur 240 est prévu pour être séparé de la portion de maintien 220, par exemple à la main, ou bien à l'aide d'un outil simple telle qu'une pince, notamment une pince coupante.

L'organiseur 240 présente ici une forme de fleur, avec des portions en forme de pétales 242, qui s'étendent chacun radialement à l'axe central A220. Chaque pétale 242 est avantageusement aligné, selon l'axe principal A220, avec un chemin de guidage 224 respectif. Selon les conventions de raccordement ElA TIA 568 A et/ou B - qui s'appliquent notamment au raccordement des connecteurs dits « RJ45 » -, chaque fil 210 du câble Ethernet est associé à un code couleur unique, par exemple bleu, rayé bleu-blanc, vert, rayé vert-blanc, etc. -. Chaque pétale 242 porte avantageusement un code couleur et/ou alphanumérique, qui est associé de manière non équivoque à l'un des fils 210 du câble Ethernet. De préférence, chaque pétale 242 porte un code couleur identique au code couleur du fil 210 correspondant, ce code couleur respectant les conventions de raccordement ElA TIA 568 A ou B. L'organiseur 240 comprend ici huit pétales 242, chacun associé à un fil 110 appartenant à une paire torsadée, tandis qu'aucun pétale 242 n'est associé au neuvième fil 110 de drain d'écran.

Comme illustré sur la figure 7c), grâce à l'organiseur 240, l'installateur reconnait facilement lequel des fils 210 il doit mettre en place dans quel chemin de guidage 224, réduisant les risques d'erreurs. L'agencement radial des portions de connexion 226 par rapport à l'axe central A220 donne à l'installateur une vue claire des fils 210 et des portions de guidage 226. Cette opération de mise en place des fils 210 est particulièrement rapide et facile, notamment parce qu'il n'est pas nécessaire de dénuder chaque fils 210 en vue de leur connexion ultérieure au module complémentaire 30, ce dernier étant pourvu de connecteurs 36 auto-dénudants.

Une fois que chaque fil 210 est reçu dans le chemin de guidage 224 correspondant, l'installateur peut insérer le dispositif de connexion 200 dans le boitier 42 en passant par une ouverture 46 libre, comme représenté à la figure 2 b).

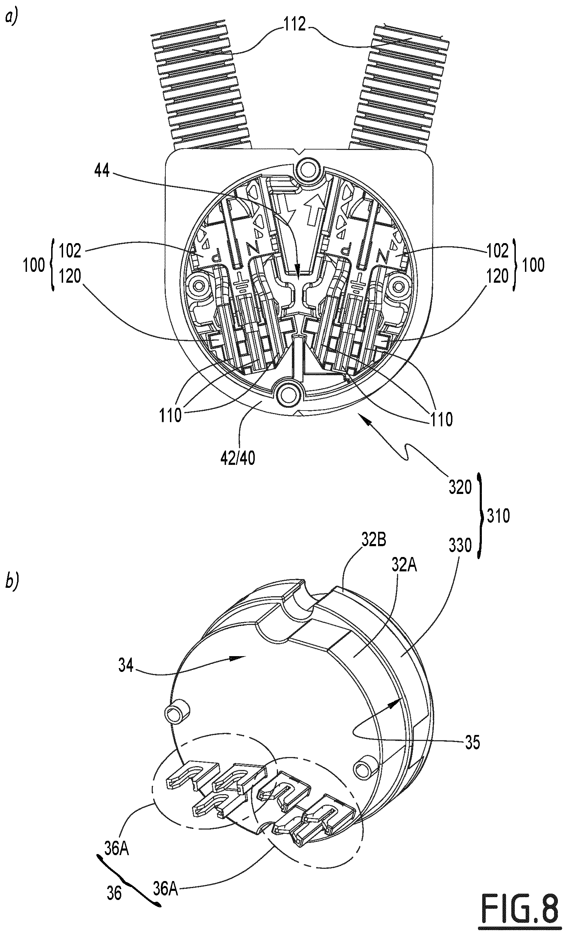

Un ensemble de connexion 310, conforme à un autre mode de réalisation de l'invention, est représenté en figure 8. Par rapport à l'ensemble de connexion 10 décrit précédemment, l'ensemble de connexion 310 comprend une prise de connexion 320 avec une boite de connexion électrique 40 à laquelle sont connectés deux dispositifs de connexion 100 du premier type, c'est-à-dire prévus pour la connexion d'un câble de puissance électrique comprenant trois fils 110. Les deux dispositifs de connexion 100 sont de préférence identiques l'un à l'autre.

L'ensemble de connexion 310 comprend un module complémentaire 330 sur lequel sont disposés deux connecteurs 36 du type des premiers connecteurs 36A, chacun des premiers connecteurs 36A étant configuré pour être respectivement connecté à un dispositif de connexion 100 du premier type.

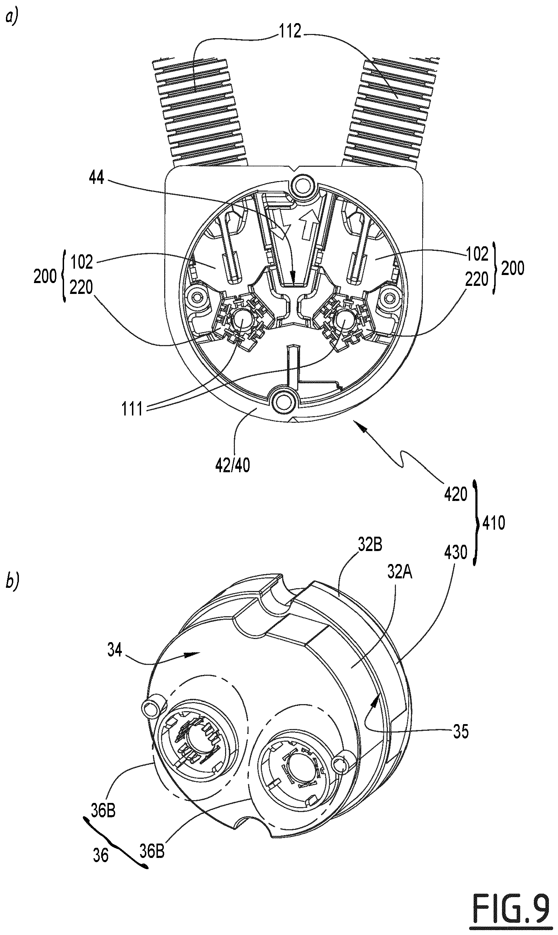

Un ensemble de connexion 410, conforme à un autre mode de réalisation de l'invention, est représenté en figure 9. Par rapport à l'ensemble de connexion 310 décrit précédemment, l'ensemble de connexion 410 comprend une prise de connexion 420 avec une boite de connexion électrique 40 à laquelle deux dispositifs de connexion 200 conformes au deuxième mode de réalisation sont connectés, c'est-à-dire deux dispositifs de connexion 200 du deuxième type, prévus pour la connexion d'un câble Ethernet à neuf fils 210. Les deux dispositifs de connexion 200 sont de préférence identiques l'un à l'autre.

L'ensemble de connexion 410 comprend un module complémentaire 430 sur lequel sont disposés deux connecteurs 36 du type des deuxièmes connecteurs 36B, chacun des deuxième connecteurs 36B étant configuré pour être respectivement connecté à un dispositif de connexion 200 du deuxième type.

On comprend que de multiples configurations sont possibles, le même type de boitier 42 étant compatible avec les dispositifs de connexion 100 du premier type ou les dispositifs de connexion 200 du deuxième type. En corolaire, plusieurs sortes de modules complémentaire sont également possibles.

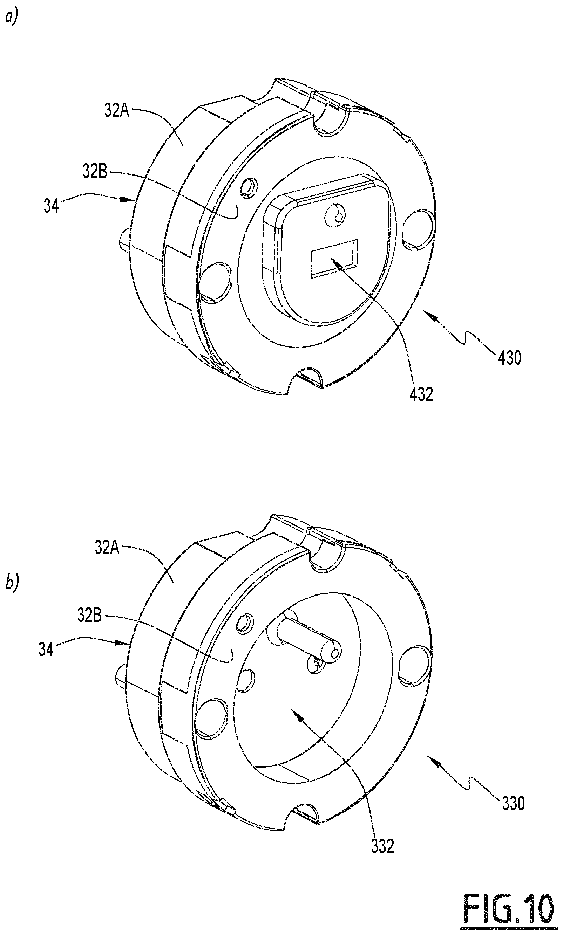

En référence à la figure 10a), le module complémentaire 430 comprend ici une prise 432, par exemple une prise de type RJ45 femelle. Dans certaines configurations dites « puissance par Ethernet », ou POE, acronyme de *Power over Ethernet* en anglais, les câbles Ethernet permettent de transmettre une puissance électrique allant jusqu'à plusieurs dizaines de Watts. En variante ou en complément, le module complémentaire 430 comprend un dispositif de communication sans fil, par exemple un point d'accès WiFi, ou Bluetooth, ou Zigbee... En variante, la prise 432 est une prise au format USB, par exemple pour recharger un appareil mobile tel qu'un smartphone.

En référence à la figure 10b), le module complémentaire 330 décrit précédemment comprend, sur une face avant, une prise électrique 332. Le format de la prise n'est pas limitatif.

Plus généralement, en fonction de la combinaison des types de câbles, de puissance ou Ethernet, qui sont connectés au boitier 42, il est possible de proposer des modules complémentaires offrant de multiples fonctionnalités

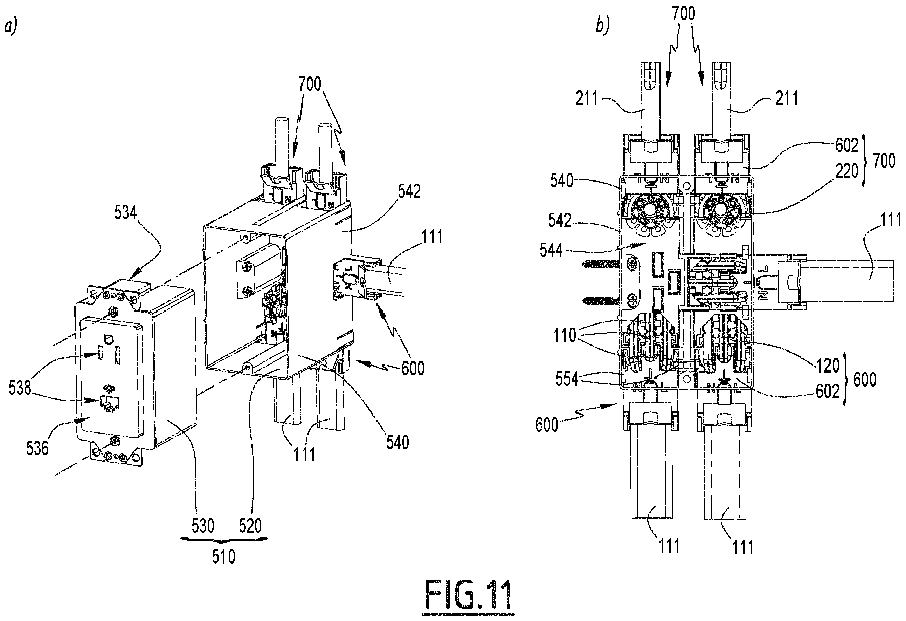

Un ensemble de connexion 510, conforme à un autre mode de réalisation de l'invention, est représenté en figure 11.

L'ensemble de connexion 510 comprend une prise de connexion 520 et un module complémentaire 530. Le module complémentaire 520 est représenté en configuration de connexion, à distance de la prise de connexion 520.

Le module complémentaire 530 comprend ici une forme globalement parallélépipédique, avec une face intérieure 534, qui est orientée vers la prise de connexion 520, et une face avant 536, qui est orientée à l'opposé de la face intérieure 534. La face avant 536 comprend ici deux connecteurs femelle 538, incluant ici un connecteur RJ45 et un connecteur de puissance, ici au format nord-américain.

La prise de connexion 520 comprend une boite de connexion 540, laquelle comprend un boitier 542 auquel sont connectés plusieurs dispositifs de connexion, ici au nombre de cinq. Dans l'exemple illustré, les dispositifs de connexion sont de deux types différents, incluant un dispositif de connexion 600 du premier type, qui est configuré pour être connecté à trois fils 110 de puissance, et un dispositif de connexion 700 du deuxième type, qui est configuré pour la connexion de câbles Ethernet. Dans l'exemple illustré, la prise de connexion 520 comprend deux dispositifs de connexion 700 du deuxième type, situés sur le haut de la figure 11b), et trois dispositifs de connexion 600 du premier type.

Chaque dispositif de connexion 600, 700 comprend une portion principale 602 et une portion de maintien 120 ou 220, qui est analogue, de préférence identique, aux portions de maintien décrites en référence aux modes de réalisation précédents.

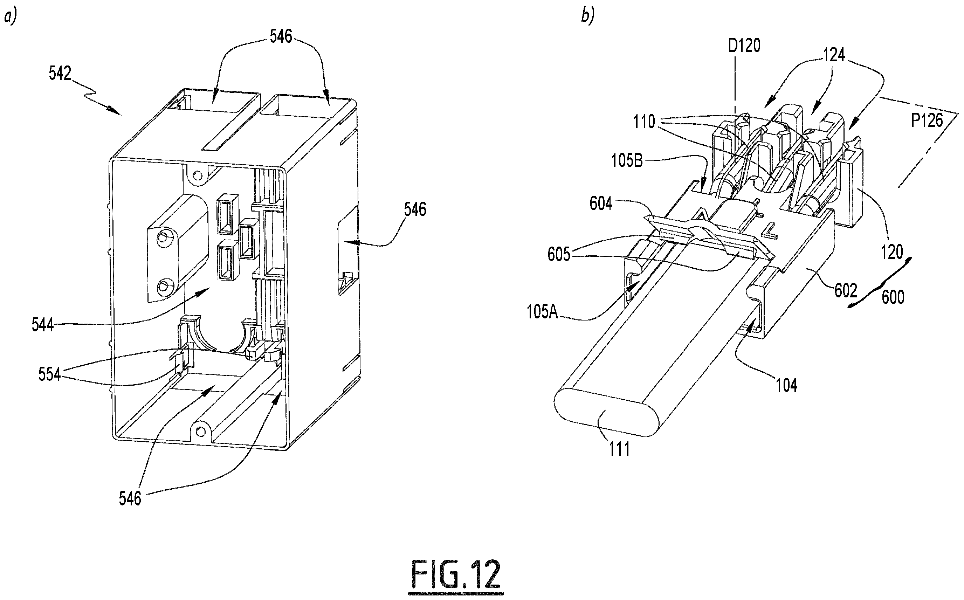

En référence à la figure 12a), le boitier 542 présente une forme globalement parallélépipédique, avec cinq ouverture 546 qui sont chacune prévues pour laisser passer un dispositif de connexion 600, 700 respectif lors de l'assemblage de ce dispositif de connexion au boitier 542. Le boitier 542 comprend un fond 544 qui ménage des logements 552 de réception des dispositifs de connexion 600 ou 700.

Dans l'exemple illustré, le boitier 542 comprend des clips 554, qui sont prévus pour coopérer avec le corps 602 de chaque dispositif de connexion 600, 700, de manière à manière à maintenir en position le dispositif de connexion 600, 700 par rapport au fond 544, en particulier pour maintenir le dispositif de connexion 600, 700 en configuration de connexion.

En référence à la figure 12b), les trois fils 110 sont partiellement reçus dans une gaine de protection 111, qui présente ici une forme oblongue. La gaine 111 est coupée à la longueur voulue et pénètre par l'ouverture arrière 105A dans le passage 104, les fils 110 sortant par l'ouverture avant 105B.

La portion principale 602 comprend avantageusement une plaquette 604, qui est articulée en rotation par rapport au reste du corps 602 et qui comprend des ergots 605, qui sont configurés pour pincer le câble, ici la gaine 111, lorsque ce câble est reçu dans le passage 104, de manière à empêcher les mouvements du câble le long du passage 104. La plaquette 604 est un exemple de dispositif de blocage du câble.

Les modes de réalisation et les variantes mentionnées ci-dessus peuvent être combinés entre eux pour générer de nouveaux modes de réalisation de l'invention.

## Revendications

1. Dispositif de connexion (100 ; 200 ; 600 ; 700) pour connecter un câble électrique multi-fils (110 ; 210) à un module complémentaire (30 ; 330 ; 430 ; 530), **caractérisé en ce que** le dispositif de connexion comprend :
- une portion principale (102 ; 602), qui forme un passage (104) configuré pour guider une extrémité du câble, le passage (104) incluant un conduit principal (106), qui débouche à l'extérieur de la portion principale,
- une portion de maintien (120 ; 220), qui est solidaire de la portion principale (102 ; 602) et qui est configurée pour positionner l'extrémité du câble émergeant du passage,
dans lequel :
- la portion de maintien (120 ; 220) comprend un ou plusieurs chemins de guidage (124 ; 224), qui sont chacun configurés pour recevoir un fil (110 ; 210) respectif du câble, de manière à maintenir le fil correspondant dans une position prédéterminée par rapport à la portion de maintien,
- chaque chemin de guidage (124 ; 224) comprend une portion de connexion (126 ; 226), qui s'étend parallèlement à un même plan de connexion (P126 ; P222) que la portion de maintien,
- les portions de connexion sont agencées de manière à autoriser l'accès à chaque fil (110 ; 210) reçu dans la portion de connexion (126 ; 226) correspondante selon une direction de connexion (D120 ; A220) orthogonale au plan de connexion,
- le dispositif de connexion (100 ; 200 ; 600 ; 700) est configuré pour coopérer avec le module complémentaire (30 ; 330 ; 430 ; 530) en rapprochant le module complémentaire du dispositif de connexion selon un mouvement de connexion parallèle à la direction de connexion (D120 ; A220), de manière à connecter le module complémentaire à chacun des fils (110 ; 210) reçus dans la portion de connexion correspondante, la portion de maintien (120 ; 220) étant dans une position de connexion par rapport à la portion de principale (102 ; 602).

2. Dispositif de connexion (100 ; 200 ; 600 ; 700) selon la revendication 1, dans lequel :
- chaque portion de connexion (126 ; 226) est configurée pour coopérer avec un connecteur (36) respectif du module complémentaire (30 ; 330 ; 430 ; 530), en particulier un connecteur auto dénudant, de manière à connecter électriquement chaque fil (110 ; 210) reçu dans la portion de connexion (126 ; 226) correspondante au connecteur complémentaire correspondant par translation selon la direction de connexion (D120 ; A220).

3. Dispositif de connexion (600 ; 700) selon l'une quelconque des revendications 1 ou 2, dans lequel :
- la portion principale (602) comprend un dispositif de blocage (604), qui est configuré pour pincer le câble lorsque ce câble est reçu dans le passage (104), de manière à empêcher les mouvements du câble le long du passage.

4. Dispositif de connexion (100 ; 200) selon l'une quelconque des revendications 1 ou 2, dans lequel :
- la portion principale (102) est configurée pour être fixée à une extrémité d'une gaine (112) de protection du câble, le passage (104) étant agencé dans le prolongement de la gaine.

5. Dispositif de connexion (100 ; 200) selon la revendication précédente, dans lequel :
- la portion principale (102) est configurée pour être fixée à une extrémité d'une gaine (112) annelée comprenant des anneaux (114),
- la portion principale comprend des organes de clipsage (105C), qui sont configurés pour être coopérer avec les anneaux (114) de la gaine, de manière à fixer la portion principale (102) à la gaine.

6. Dispositif de connexion (100 ; 200 ; 600 ; 700) selon l'une quelconque des revendications 1 à 5, dans lequel la portion de maintien (120 ; 220) est mobile en rotation par rapport à la portion principale (102 ;602) entre :
- une position de montage, dans laquelle la portion de maintien n'empêche pas le mouvement longitudinal du câble dans le passage (104), et
- la position de connexion, dans laquelle les portions de connexion (126 ; 226) sont propres à maintenir chaque fil (110 ; 210) afin de connecter chaque fil au module complémentaire (30 ; 330 ; 430 ; 530).

7. Dispositif de connexion (200 ; 700) selon la revendication 6, dans lequel :
- le conduit principal (106) est configurée pour recevoir un câble comprenant quatre paires de fils (110 ; 210), notamment un câble de type Ethernet tel que défini dans la norme IEEE 802.3,
- la portion de maintien (220) comprend un orifice central (223), qui prolonge le conduit principal (106) lorsque la portion de maintien est en position de montage, et qui forme un angle avec le conduit principal lorsque la portion de maintien est en position de connexion, de manière à guider le câble reçu dans le conduit principal et l'orifice central avec un rayon de courbure (R220) supérieur à 3 mm.

8. Dispositif de connexion (200 ; 700) selon la revendication 7, dans lequel :
- les portions de connexion (126 ; 226) sont agencées radialement à un axe central (A220) de l'orifice central (223).

9. Dispositif de connexion (100 ; 600 ; 700) selon l'une quelconque des revendications 1 à 6, dans lequel :
- le passage (104) inclut, outre le conduit principal (106), au moins un conduit secondaire (108A ; 108B), chaque conduit principal ou secondaire étant configuré pour recevoir un fil (110 ; 210) respectif du câble,
- la portion de maintien (120) comprend plusieurs chemins de guidage (124), qui sont chacun associés à un conduit (106, 108A, 108B) respectif et qui sont agencés parallèlement les uns aux autres,
- les portions de connexion sont parallèles au conduit principal lorsque la portion de maintien est en position de connexion.

10. Pièce d'assemblage (50), configurée pour former un fond d'une boite de connexion électrique, la pièce d'assemblage comprenant :
- au moins un logement, de préférence deux logements, chaque logement étant configuré pour coopérer, notamment par complémentarité de formes, avec un dispositif de connexion (100 ; 200 ; 600 ; 700) respectif, chaque dispositif de connexion étant conforme à l'une quelconque des revendications 1 à 9, de manière à maintenir chaque dispositif de connexion en configuration de connexion.

11. Pièce d'assemblage (50) selon la revendication 10, comprenant en outre des organes de maintien (54, 109 ; 554), qui sont configurés pour coopérer, notamment par complémentarité de formes, avec la portion principale (102 ; 602) de chaque dispositif de connexion (100 ; 200 ; 600 ; 700), de manière à maintenir en position ce dispositif de connexion par rapport à la pièce d'assemblage.

12. Boite de connexion (40 ; 540), comprenant un boitier (42 ; 542) configuré pour être fixé à une cloison (12), et une pièce d'assemblage (50) selon l'une quelconque des revendications 10 ou 11, la pièce d'assemblage formant un fond (44) du boitier.

13. Boite de connexion (40 ; 540) selon la revendication 12, dans laquelle :
- la pièce d'assemblage (50) est une pièce rapportée au reste du boitier (42 ; 542).

14. Boite de connexion (40 ; 540) selon la revendication 12, dans laquelle
- la pièce d'assemblage (50) est réalisée d'une seule pièce avec le reste du boitier (42 ; 542).

15. Prise de connexion (20 ; 320 ; 420 ; 520), comprenant :
- une boite de connexion (40 ; 540) selon l'une quelconque des revendications 12 à 14, et
- au moins un dispositif de connexion (100 ; 200 ; 600 ; 700) selon l'une quelconque des revendications 1 à 9, chaque dispositif de connexion étant associé à un logement (52) respectif de la pièce d'assemblage (50),
dans laquelle :
- chaque portion de maintien (120 ; 220) est reçue dans un logement (52) respectif de la pièce d'assemblage (50), chaque dispositif de connexion étant maintenu en configuration de connexion,
- la direction de connexion (D120 ; A220) est orthogonale au fond (44) du boitier (42 ; 542).

16. Module complémentaire (30 ; 330 ; 430 ; 530), configuré pour être assemblé à une prise de connexion (20 ; 320 ; 420 ; 520) selon la revendication 15, dans lequel :
- le module complémentaire comprend une portion de montage (32A), configurée pour être insérée dans le boitier (42 ; 542), selon un mouvement de translation orthogonal au fond (44) du boitier,
- la portion de montage comprend une face inférieure (34 ; 534), sur laquelle sont disposés des connecteurs (36), de préférence des connecteurs auto-dénudants,
- chaque connecteur est agencé de manière à coopérer avec une portion de connexion (126 ; 226) respective lorsque le module complémentaire (30 ; 330 ; 430 ; 530) est inséré dans le boitier (42 ; 542) selon le mouvement de translation, de sorte que, lorsqu'un fil (110 ; 210) est reçu dans cette portion de connexion, le connecteur (36) correspondant est électriquement connecté à ce fil.

17. Ensemble de connexion (10 ; 310 ;410 ; 510) électrique, comprenant :
- une prise de connexion (20 ; 320 ; 420 ; 520) selon la revendication 15,
- un module complémentaire (30 ; 330 ; 430 ; 530) selon la revendication 16,
dans lequel :
- le module complémentaire est inséré dans la prise de connexion.
